# EUROPEAN PATENT APPLICATION

(11) **EP 4 847 118 A1**
(43) Date of publication of application: **02.12.2026**
(21) Application number: 25179653.8
(22) Date of filing: 29.05.2025
(51) Int. Cl.: B01D 53/85, B01D 71/00

(54) **A METHANE REMOVAL BIOREACTOR**

(71) Applicant: The Provost, Fellows, Foundation Scholars and the other members of Board, of the College of the Holy and Undivided Trinity of Queen Elizabeth, Dublin 2 (IE)
(72) Inventor: Ali, Muhammad, Dublin (IE); Gill, Laurence, Dublin (IE); Bellec, Morgane, Dublin (IE); Ghaani, Masoud, Dublin (IE)
(74) Representative: Tomkins & Co

(57) **Abstract**

Provided herein is a bioreactor for removal of methane from a waste stream, the bioreactor comprising:
(a) an adsorption medium for adsorption of methane from the waste stream,
(b) at least one methanotrophic microorganism for metabolising adsorbed methane into carbon dioxide;
(c) a means for generating a passive flow of the waste stream through the bioreactor;
(d) a means to connect the bioreactor to a waste receptacle,
wherein the adsorption medium is capable of supporting growth of the methanotrophs thereon.

Further provided is a method for removal of methane from a waste stream.

## Description

### Field of the Invention

The present invention relates to a bioreactor for the reduction of, or removal of, methane from gaseous waste streams. The bio reactor is particularly suitable for use with septic tanks.

### Background to the Invention

The European Green Deal has pledged to achieve net-zero Greenhouse Gas (GHG) emissions by 2050. In line with this, Ireland has also committed to reaching climate neutrality by no later than 2050 and aims to reduce GHG emissions by 51% by 2030. However, Ireland is only projected to achieve a reduction of 29% in GHG emissions by 2030 compared to a target of 51%. All sectors (except buildings) are projected to breach their sectoral emissions ceiling for 2025 and 2030. Further measures still need to be identified and implemented to achieve the goal. Methane (CH₄) is Ireland's second-largest contributor to GHG emissions, accounting for 28% (17,650 kt CO₂ eq) of emissions in 2021. Methane has ~30 times more global warming potential than carbon dioxide and has contributed to one-third of the net warming since the Industrial Revolution. The Global Methane Pledge (GMP) was launched at COP26 by the EU and US, currently with over 155 country participants. Participant countries in the GMP have agreed to take actions to reduce global CH₄ emissions by at least 30 per cent from 2020 levels by 2030. The GMP states that the rapid reduction of CH₄ emissions from the energy, agriculture, and waste sectors is regarded as the single most effective strategy for near-term gains in this decade to limit global warming. This underscores the necessity for Ireland and other countries to enact significant policy reforms and technological advancements to achieve CH₄ emission reductions if it is to meet its 2030 GHG emission targets.

Over half of the Irish anthropogenic CH₄ emissions occur at relatively low concentrations (<5%), from various sources such as slurry management (2,065.8 kt CO₂ eq), landfills (703.2 kt CO₂ eq), and domestic wastewater treatment (60 kt CO₂ eq). The low purity and diluted nature of CH₄ emissions from these sources make them unsuitable for energy recovery through physical-chemical treatments or even flaring as they often fall below the CH₄ flammability limit. Hence, they generally escape into the environment, contributing to global warming. It is important to note that the current method used to quantify and report on non-CO₂ GHG emissions (such as CH₄) from wastewater treatment relies on estimates based on average organic waste inputs per unit population in treatment facilities. For instance, the CH₄ emission factor is assumed to be ~1.095 kg-CH₄/person/year (32.6 kg CO₂ eq/person/year) for septic tanks (STs). In Ireland, 475,990 registered households are utilising STs to treat wastewater from premises that are not connected to a public sewer system. These domestic STs service ~1.43 million people, one-third of Ireland's population, and are estimated to emit approximately 46.5 kt CO₂eq. A low-cost passive treatment device that effectively reduces the emissions of low-purity methane from such wastewater treatment systems offers an excellent opportunity to reduce significantly the net GHG emissions from this sector.

The typical low concentration (<5%) of diluted CH₄ emitted from passive waste and wastewater treatment processes usually makes it inviable for thermal oxidation (flaring or energetic valorisation). However, microbial methane oxidation by methanotrophic biofilters is an alternative form of treatment that holds great promise. In the past, researchers have used various materials such as coal, fly ash and peat moss in biofilters but the efficacy of CH₄ oxidation was found to be very low due to lower biokinetics of methanotrophs on this diluted stream. Methanotrophs exhibit a broad range (0.01 to 100 µM of CH₄) of half-saturation constants (*K_{S}*) to their CH₄ oxidation kinetics and are commonly categorized as either "high-affinity" or "low-affinity" methanotrophs. This means that the methanotrophic bacteria can break down the CH₄ over a wide range of different conditions. The most commonly found methanotrophs are categorized as low-affinity methanotrophs, having much higher KS values between 1-100 µM. The kinetics of CH₄ oxidation is often modelled by Michaelis-Menten and/or Monod models with both models relating the reaction rate or growth rate to the substrate concentration. This implies that the CH₄ oxidation rate (Michaelis-Menten) and the methanotrophs growth rate (Monod) increase with an increase in CH₄ concentration. Therefore, to improve the efficiency of the process, it is highly desirable to concentrate a dilute CH₄ stream to a level at which biological treatment (CH₄ oxidation to CO₂ by methanotrophs) becomes a viable solution to effective abatement of CH₄ emissions. The adsorption of CH₄ is especially attractive for many small or remote sources such as ST because of low and/or intermittent flows. Most existing CH₄ biofilters utilize soil, (La et al., 2018) activated carbon and graphene for CH₄ capture. However, whilst these may be good media for oxidation of medium to high-purity CH₄, they are not ideal for systems that need to operate in an environment where CO₂ is present in much higher concentrations than CH₄, which is the case for the off-gas from ST for example as they will preferentially adsorb CO₂ over CH₄. Hence, adsorption is typically not considered a suitable process for the treatment of CH₄ due to the low affinity of CH₄ for many adsorbents. Alternatively, membrane-based concentration systems are getting popular but remain a costly alternative for the concentration of such a low flow and dilute CH₄ stream generated via STs.

EP4083200A2 discloses a supported biocatalyst for conversion of methane from a waste gas stream, including from wastewater treatment processes, in the substantial absence of water. The biocatalyst is immobilized within the pores of the porous support media.

WO2022248485A1 describes a method for the mitigation of atmospheric methane release from the soil within an environment zone.

There remains a need for an efficient and cost-effective CH₄ biofilter which can be used to curb or mitigate point source CH₄ emissions by conversion of methane to carbon dioxide with the use of effective biotechnology. The present invention aims to address this need.

### Summary of the Invention

In one aspect, the present invention provides a bioreactor for removal of methane from a waste stream produced in a waste receptacle, the bioreactor comprising:
(a) a means to connect the bioreactor to a waste receptacle;
(b) an adsorption medium for adsorption of methane from the waste stream;
(c) at least one methanotrophic microorganism for metabolising adsorbed methane into carbon dioxide;
(d) a means for generating a passive flow of the waste stream through the bioreactor;
wherein the adsorption medium is capable of supporting growth of the methanotrophs thereon.

The means for generating a passive flow of the waste stream through the bioreactor ensures that a continuous drag force is applied to the bioreactor, pulling the methane-containing waste stream through the bioreactor and providing the methanotrophs present in the system with a continuous source of methane.

The means for generating a passive flow of the waste stream through the bioreactor also provides a means for venting of the products of the metabolism of the adsorbed methane.

Preferably the waste stream is a gaseous waste stream.

The passive flow of the waste stream through the bioreactor may occur at a velocity of from about 0.05 m/s to about 5 m/s, suitably from about 0.1 m/s to about 2 m/s.

The passive flow of the waste stream through the bioreactor may occur at a flow rate of from about 20 litres/min to about 2000 litres/min, suitably from about 50 litres/min to about 1000 litres/min.

For the absence of doubt, in the present application, 'passive' is defined to mean that no external energy input is required and a 'passive flow' refers to a flow generated without the need for an external energy input. For example, the flow is generated without the need for any electrical or fuel source. Wind power is not considered to be an external energy input in this definition.

The means for generating a passive flow of the waste stream may comprise a ventilator fan. The ventilator fan may comprise a drag fan. The ventilator fan may comprise a wind-driven drag fan.

The drag force over the bioreactor ensures that all the methane produced in the waste receptacle goes through the ventilator fan and doesn't exit the waste treatment system through other vents that are not equipped with a filter (for example through a roof).

The adsorption medium may comprise one or more of the following: activated carbon, zeolites, or any combination thereof.

Suitable zeolites may include: Zeolite ferrierite, ammonium; Zeolite Y, Hydrogen; Zeolite mordenite, Ammonium; Zeolite B, Ammonium; Zeolite Y, Ammonium; Zeolite ZSM-5, Ammonium; and combinations thereof.

Suitably, the adsorption medium comprises activated carbon.

Suitably, the adsorption medium has an average pore diameter size of from about 1 mm to about 3 mm, preferably from about 1.0 mm to about 1.5 mm, which provides a balance between gas flow, microbial colonization, and clogging resistance. This may correspond to a media porosity of from about 0.3 to about 0.5, with both parameters characterized in accordance with ASTM D2854-09. If the pore size of the adsorption medium is too large, the bioreactor may be ineffective. If the pore size is too small, the bioreactor may clog very quickly.

Suitably, the adsorption medium comprises particles having an average particle size of from about 0.02 mm to about 3 mm, as determined in accordance with ASTM D2862-16, preferably from about 0.1 mm to about 2.0 mm. Such a range provides a balance between structural stability, gas flow, and microbial colonization. This may correspond to a bed porosity of from about 0.3 to about 0.5, as measured according to ASTM D2854-09.

Alternatively or additionally, the pore diameter size of the adsorption medium may be varied along the length and/or breadth of the bioreactor. For example, the bioreactor may comprise a selection of adsorption media with different pore sizes. Larger pores may be useful at the end of the reactor where the waste stream enters the reactor, where the methanotrophs grow more quickly, to prevent clogging. The end of the bioreactor adjacent the exit port for the waste stream, may have adsorption media with a smaller pore size. The pore size of the adsorption medium may vary between either of these ends.

Preferably, the adsorption medium has a methane adsorption capacity of greater than about 0.3 µmoles of methane adsorbed per gram of media, suitably greater than about 0.41 µmoles of methane adsorbed per gram of media, when measured using methane quantification using gas chromatography.

Adsorption media suitable for use in the invention can be obtained commercially in a variety of pore diameter sizes, particle sizes, etc.

Suitably, the adsorption medium adsorbs methane preferentially over carbon dioxide. The selectivity, i.e. the ratio of adsorbed CH₄/CO₂, should ideally be as high as possible. Without wishing to be bound by theory, it is understood that when an adsorption medium with a high affinity for methane is used, methane gas is adsorbed onto the medium as soon as the waste stream is introduced to the bioreactor. This initial deposit of methane then facilitates the growth of the methanotrophs on the medium's surface, allowing the formation of a biofilm.

The at least one methanotrophic microorganism may be provided in the form of a soil sample containing at least one methanotrophic microorganism. The soil sample may be introduced to the bioreactor as an inoculum, from which growth of the at least one methanotrophic microorganism can continue, supported by the adsorption medium.

The at least one methanotrophic microorganism may comprise one or more of the following: methylococcaceae (including methylococcus, methylomonas, methylobacter, methylomicrobium, methylosarcina, methylocaldum, methylogea, methylosoma, methyloparacoccus, methyloglobulus, methyloprofundus, methylomarinum, methylovolum, methylomagnum, methylosphaera); methythermaceae (including methylothermus, methylohalobius, methylomarinovum); methylocystaceae (including methylosinus, methylocystis); beijerinckiaceae (including methylocella, methylocaspa, methyloferula); ANME-1; ANME-2; ANME-3; verrucomicrobia (including methylacidiphilum, methylacidimicrobium); methylomirabilis bacteria; methanoperedens nitroreducens; methanoperedens ferrireducens; methanoperedens manganicus & manganireducens.

As described above, it is believed that when the inoculum is initially introduced to the bioreactor, the methane adsorbed onto the surface of the adsorption medium facilitates the initial strong growth of methanotrophs on the media surface due to improved kinetics and better CH₄ conversion rates per unit bacterial mass. A higher concentration of CH₄ promotes a higher rate of methanotroph growth and CH₄ oxidation which leads to faster conversion. When an adsorption medium with a high affinity for methane is used, the concentration of methane on the medium is maximised. This high methane concentration is believed to lead to increased rates of both growth of the methanotrophs and of methane oxidation by the methanotrophs.

The methanotrophs' growth, supported by the adsorption medium, allows a biofilm to form. Once the biofilm is established and covers the adsorption sites, the methanotrophs will directly convert methane to carbon dioxide. Diffusion processes will transport methane into the biofilm and the microbes in the biofilm will convert CH₄ to CO₂ during biological processes. The use of the adsorption medium as a support for the methanotrophs may help to overcome the rate-limiting step of mass transfer from the gas phase into methanotrophic biofilm for low-purity methane streams, which is often a problem in known techniques.

The waste receptacle may be an on-site wastewater treatment system such as a septic tank. Alternatively the waste receptacle may be a receptacle or structure where waste is stored and/or generated, for example a slurry pit or slurry tank, a cattle shed or other animal housing, landfill sites or other waste storage sites etc. The waste receptacle should be at least partially enclosed such that it can trap a substantial portion of the emitted methane and direct it to the bioreactor.

The bioreactor may further comprise a means for incorporating water into the adsorption medium.

The means for incorporating water into the adsorption medium may comprise a one or more water distribution channels, which distribute water throughout the adsorption medium.

The means for incorporating water into the adsorption medium may be a system for incorporating rainwater into the adsorption medium. For example, the bioreactor may comprise a rainwater collector and/or one or more rainwater distribution channels, which distribute collected rainwater throughout the adsorption medium.

The means for incorporating water into the adsorption medium provides moisture to microbes in the bioreactor and also acts as a biofilm shearing mechanism to prevent clogging.

Suitably, the bioreactor is configured to be installed on a vent pipe from a waste treatment system, for example on a vent pipe from a septic tank.

Suitably, the bioreactor can operate without any external energy input. This is beneficial since installation sites may not have a power source, may be difficult to access for maintenance and many end-users do not actively maintain their wastewater systems.

Suitably, the components of the bioreactor are separable/reconnectable to one another, i.e. the bioreactor comprises separate, individual parts that can be easily added, removed, or rearranged. This means the system can be customized and expanded as needed, making it adaptable to various sizes and capacities depending on the methane emission sources. This versatility allows it to be used in a wide range of applications and scaled up or down as required.

In another aspect, the present invention provides a method for removal of methane from a waste stream emanating from an at least partially enclosed waste receptacle, comprising:
(a) providing an adsorption medium for adsorption of methane;
(b) providing at least one methanotrophic microorganism;
(c) allowing the at least one methanotroph to form a biofilm on the adsorption medium;
(d) generating a flow of a methane-containing waste stream through the adsorption medium so that methane from the waste stream can be adsorbed onto the adsorption medium;
(e) concentrating the methane on the adsorption medium;
(f) allowing the biofilm of methanotrophs to metabolise the adsorbed methane;
(g) venting the products of the metabolism of the adsorbed methane.

The waste receptacle may be an on-site wastewater treatment system such as a septic tank. Alternatively the waste receptacle may be a receptacle or structure where waste is stored and/or generated, for example a slurry pit or slurry tank, a cattle shed or other animal housing, landfill sites or other waste storage sites etc. The waste receptacle should be at least partially enclosed such that it can trap a substantial portion of the emitted methane and direct it to the adsorption medium.

The method of the invention may further comprise the step of hydrating the absorption medium. Suitably, the absorption medium may be hydrated with rainwater.

The invention further provides a method for removal of methane from a waste stream as described herein, carried out using a bioreactor as described above.

Suitably, methods of the invention may achieve an efficiency of CH₄ conversion to CO₂ of at least 50%, for example at least 70%, for example 80% or higher, for example 90% or higher, when measured using methane quantification using gas chromatography.

### Brief Description of the Drawings

Embodiments of the invention will be described, by way of example only, with reference to the accompanying drawings in which:
**Figure 1** is a schematic representation of a bioreactor of the invention installed on an on-site wastewater treatment system;
**Figure 2A** is a plot showing modelled total methane consumption of bioreactors until regeneration depending on the porous medium parameters, as estimated from biofilm model simulations;
**Figure 2B** is a graph showing the performance of various adsorption media in terms of methane adsorption, measured in µmoles of methane adsorbed per gram of media.
**Figure 3A** shows a bioreactor according to the invention;
**Figure 3B** shows a cross-section of the bioreactor of Figure 3A.

### Detailed Description of the Drawings

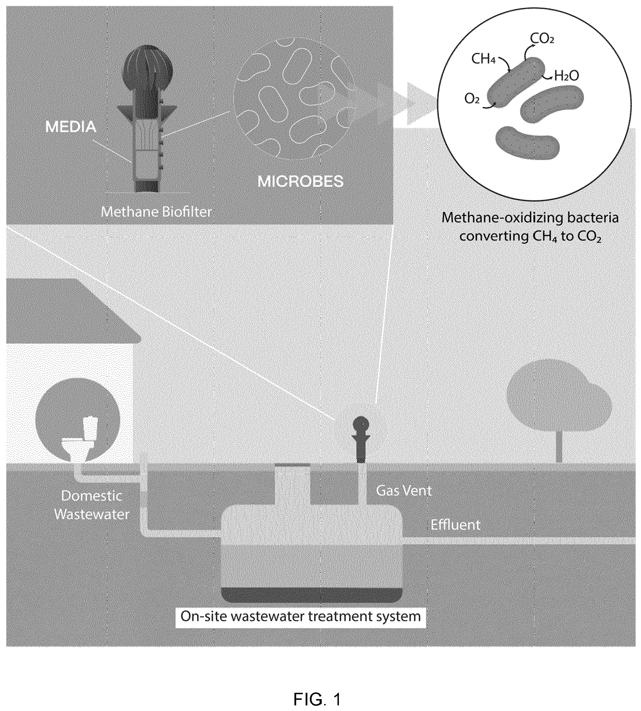

Referring first to Figure 1, a schematic representation of a bioreactor of the invention installed on an on-site wastewater treatment system is shown.

The total methane consumption of bioreactors with various adsorption media was modelled using biofilm model simulations. The simulations were carried out using the software COMSOL. A two-dimensional model of a biofilm was coupled with a one-dimensional model of the gas flow. The coupled model included the diffusion and the convection of CH₄ and O2 in the gas flow through a porous media, the mass transfer of CH₄ and O2 between the gas phase and the biofilm phase, the diffusion of CH₄ and O2 in the biofilm, and the growth of the biofilm. They were transient simulations that stopped when the biofilm growth clogged the porous media. The operating time of the bioreactor before clogging and the total oxidised methane was then estimated for different porous media characteristics.

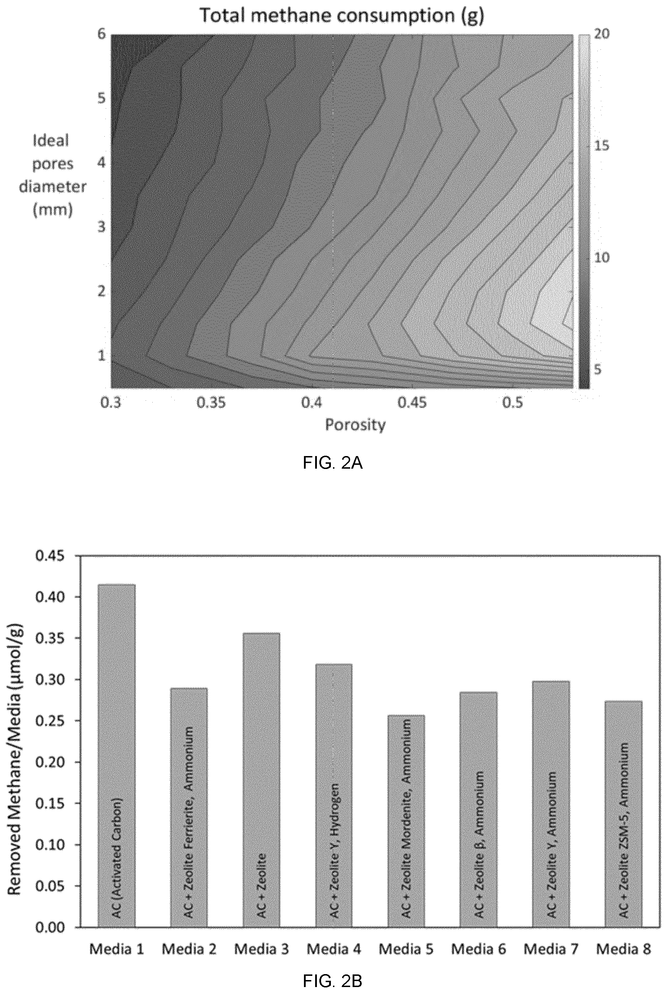

Figure 2A shows the calculated total methane consumption in g of the modelled bioreactors until regeneration, plotted against the porosity and ideal pore diameters of the various adsorption media modelled. A higher porosity is associated with a longer operating time and thus more methane oxidised. There exists an optimum ideal pore diameter: too small the pores clog quickly, too big they let more methane escape out with the gas flow. In this model, the optimum ideal pore diameter was found to vary from 1 mm at low porosity to 1.5 mm at high porosity. These values may differ in practice.

Figure 2B shows the modelled performance of various adsorption media in terms of methane adsorption, measured in µmoles of methane adsorbed per gram of media. The methane adsorption capacity of adsorption media can also be calculated using batch adsorption testing followed by methane quantification via gas chromatography.
The adsorption media tested are shown in Table 1:

**Table 1**

| | |
|---|---|
| Media 1 | Activated charcoal (125 g) |
| Media 2 | Activated charcoal (125 g) + Zeolite ferrierite, ammonium (31.25 g) in a ratio of 4:1 |
| Media 3 | Activated charcoal (125 g) + Zeolite (31.25 g) in a ratio of 4:1 |
| Media 4 | Activated charcoal (125 g) + Zeolite Y, Hydrogen (31.25 g) in a ratio of 4:1 |
| Media 5 | Activated charcoal (125 g) + Zeolite mordenite, Ammonium (31.25 g) in a ratio of 4:1 |
| Media 6 | Activated charcoal (125 g) + Zeolite B, Ammonium (31.25 g) in a ratio of 4:1 |
| Media 7 | Activated charcoal (125 g) + Zeolite Y, Ammonium (31.25 g) in a ratio of 4:1 |
| Media 8 | Activated charcoal (125 g) + Zeolite ZSM-5, Ammonium (31.25 g) in a ratio of 4:1 |

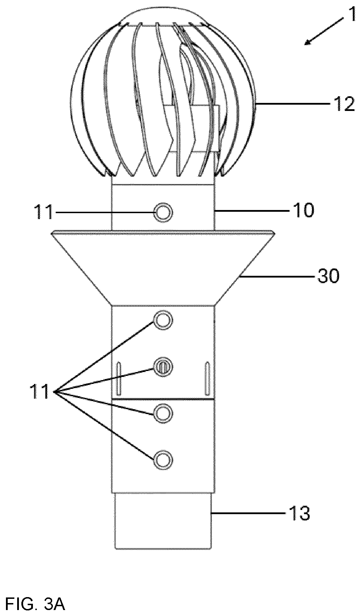

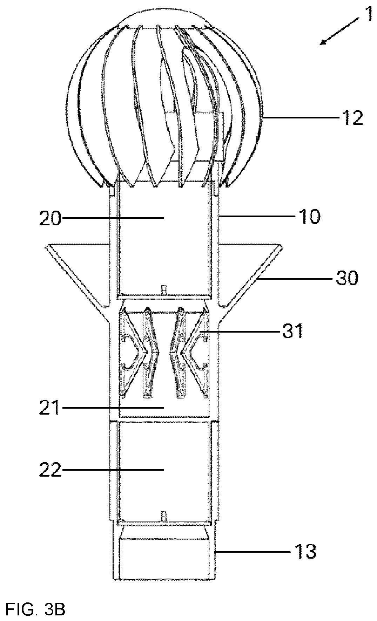

Figures 3A and 3B show a bioreactor according to the invention. The bioreactor is configured to fit on a vent pipe of a septic tank. The bioreactor is configured to stand upright once installed.

As shown in Figures 3A and 3B, the bioreactor 1 has an outer wall 10 which extends up from the tank on which it may be fitted in an in-use configuration. Along the length of the outer wall 10 are located several vent holes 11. These allow for venting of the waste stream as well as any products of methane metabolism occurring within the bioreactor. The bioreactor 1 is capped with a wind-powered ventilator fan 12. The fan needs no external energy source and once installed is powered entirely by wind. The ventilator fan generates a drag force which pulls a constant flow of the methane-containing waste stream through the bioreactor. The fan also allows for venting of the products of the metabolism of the adsorbed methane.

The bioreactor 1 has several chambers arranged vertically in the embodiment of Figures 3A-3B. The topmost chamber 20 remains empty in use and serves to keep the ventilator fan separated from the adsorption media to avoid clogging of the bioreactor in periods of heavy rain. Chambers 21 and 22 house the adsorption medium/media when in use. The same adsorption medium may be used in both chambers. Alternatively, different adsorption media may be used in each of chambers 21 and 22. For example, the chambers could each house adsorption media with different porosities. For example, an adsorption medium having a larger pore size may be present in the lower chamber 22 while an adsorption medium having a smaller pore size may be present in upper chamber 21. Chambers 21 and 22 are separated from one another by a porous mesh or net.

At its lowermost position once installed, the bioreactor 1 has a connection 13 to allow it to be fitted to a gas vent on a septic tank. Extending outwards and diagonally upwards from the outer wall 10 is a rainwater collector 30.

Extending vertically throughout chambers 21 and 22 is a plurality of rainwater distribution lines 31. These are guide veins down which rainwater can travel through the bioreactor. Instead of running down the outside of the bioreactor, rain can be caught by the rainwater collector 30. The rainwater collector 30 has holes at its base (not shown), from where the water can travel down the rainwater distribution lines 31. This allows the rainwater to come into contact with the adsorption media while in use.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A bioreactor for removal of methane from a waste stream produced in a waste receptacle, the bioreactor comprising:
(a) a means to connect the bioreactor to a waste receptacle;
(b) an adsorption medium for adsorption of methane from the waste stream;
(c) at least one methanotrophic microorganism for metabolising adsorbed methane into carbon dioxide;
(d) a means for generating a passive flow of the waste stream through the bioreactor;
wherein the adsorption medium is capable of supporting growth of the methanotrophs thereon.

2. The bioreactor of claim 1, wherein the means for generating a passive flow of the waste stream comprises a ventilator fan.

3. The bioreactor of any preceding claim, wherein the adsorption medium comprises one or more of the following: activated carbon, zeolites, or any combination thereof.

4. The bioreactor of any preceding claim, wherein the adsorption medium comprises activated carbon.

5. The bioreactor of any preceding claim, wherein the adsorption medium has an average pore diameter size of from about 1 mm to about 3 mm, as measured according to ASTM D2854-09.

6. The bioreactor of any preceding claim, wherein the adsorption medium comprises particles having an average particle size of from about 0.02 mm to about 3 mm, as determined in accordance with ASTM D2862-16.

7. The bioreactor of any preceding claim, wherein the adsorption medium has a methane adsorption capacity of greater than about 0.3 µmoles of methane adsorbed per gram of media, as measured using methane quantification via gas chromatography.

8. The bioreactor of any preceding claim, wherein the at least one methanotrophic microorganism is provided in the form of a soil sample containing at least one methanotrophic microorganism.

9. The bioreactor of any preceding claim, wherein the at least one methanotrophic microorganism comprises one or more of the following: methylococcaceae (including methylococcus, methylomonas, methylobacter, methylomicrobium, methylosarcina, methylocaldum, methylogea, methylosoma, methyloparacoccus, methyloglobulus, methyloprofundus, methylomarinum, methylovolum, methylomagnum, methylosphaera); methythermaceae (including methylothermus, methylohalobius, methylomarinovum); methylocystaceae (including methylosinus, methylocystis); beijerinckiaceae (including methylocella, methylocaspa, methyloferula); ANME-1; ANME-2; ANME-3; verrucomicrobia (including methylacidiphilum, methylacidimicrobium); methylomirabilis bacteria; methanoperedens nitroreducens; methanoperedens ferrireducens; methanoperedens manganicus & manganireducens.

10. The bioreactor of any preceding claim, wherein the waste receptacle is one of the following: a wastewater treatment system, a septic tank, a slurry pit or slurry tank, a cattle shed or other animal housing, a landfill site.

11. The bioreactor of any preceding claim, further comprising a means for incorporating water into the adsorption medium.

12. The bioreactor of any preceding claim, wherein the bioreactor can operate without any external energy input.

13. A method for removal of methane from a waste stream emanating from an at least partially enclosed waste receptacle, comprising:
(a) providing an adsorption medium for adsorption of methane;
(b) providing at least one methanotrophic microorganism;
(c) allowing the at least one methanotroph to form a biofilm on the adsorption medium;
(d) generating a flow of a methane-containing waste stream through the bioreactor such that the methane-containing waste stream is brought into contact with the adsorption medium so that methane from the waste stream can be adsorbed onto the adsorption medium;
(e) concentrating the methane on the adsorption medium;
(f) allowing the biofilm of methanotrophs to metabolise the adsorbed methane;
(g) venting the products of the metabolism of the adsorbed methane.

14. The method of claim 13, further comprising the step of hydrating the absorption medium, optionally using rainwater.

15. The method of claim 13 or 14, carried out using the bioreactor of any of claims 1-12.
